# EUROPEAN PATENT APPLICATION

(11) **EP 3 260 423 A1**
(43) Date of publication of application: **27.12.2017**
(21) Application number: 15882613.1
(22) Date of filing: 19.02.2015
(51) Int. Cl.: C02F 1/16, B01D 53/50, B01D 53/77, C01F 11/46, C02F 1/12, C02F 1/44, C02F 1/62, C02F 9/00

(54) **WATER TREATMENT SYSTEM AND METHOD**

(71) Applicant: Mitsubishi Heavy Industries, Ltd., Tokyo 108-8215 (JP)
(72) Inventor: UKAI, Nobuyuki, Tokyo 108-8215 (JP); NAKASHOJI, Hiroshi, Tokyo 108-8215 (JP); SUZUKI, Hideo, Tokyo 108-8215 (JP); YOSHIOKA, Shigeru, Tokyo 108-8215 (JP); EDA, Masayuki, Tokyo 108-8215 (JP); OKINO, Susumu, Tokyo 108-8215 (JP); USHIKU, Tetsu, Tokyo 108-8215 (JP)
(74) Representative: Henkel, Breuer & Partner
(86) International application number: PCT/JP2015/054622
(87) International publication number: WO 2016/132511

(57) **Abstract**

The present invention is provided with: a wet-type desulfurization device 16 that removes sulfur oxides from a boiler exhaust gas 12; a dehydration device 42 that separates gypsum 32 from desulfurized effluent 41 that contains a gypsum slurry; a reaction tank 101 into which separated water 43 from the dehydration device 42 is introduced, to which a chelating agent 102 is added, and in which heavy metals that are in the separated water 43 are immobilized; a solid/liquid separation unit 103 that performs solid/liquid separation on a heavy metal sludge 104 that is in the separated water 43; a mixing unit 110 that mixes the separated water 43 from the solid/liquid separation unit 103 and discharge water 22 that is generated in a plant facility; a desalination treatment device 30 that removes salt from mixed water 111 mixed by the mixing unit 110; and a spray drying device 23 that has a spraying means that sprays concentrated water 31 in which salt has been concentrated by the desalination treatment device (30), and that uses one portion 12a of the boiler exhaust gas 12 to perform spray drying.

## Description

### Field

The present invention relates to a water treatment system and a method therefor for effluent generated in a boiler plant or a chemical plant facility, for example.

### Background

For example, in a process plant of a power plant or a chemical plant, effluent is generated in, for example, a boiler, a reactor, a wet cooling tower of a condenser, a water treatment device, and so on. There are various kinds of treatment devices proposed to treat such effluent, but there may be a problem in which any of these treatment devices requires high cost. To solve such a problem, there is a proposed boiler provided with a waste water treatment device in which alkaline blow water is neutralized by spraying, into a flue gas duct, cooling water (blow water) of a cooling tower of a boiler as mists having a droplet diameter from 20 to 120 µm (Patent Literature 1).

Further, there is another proposed waste water treatment device in which an amount of waste water which can be evaporated by spraying effluent into a flue gas duct is increased (Patent Literature 2).

### Citation List

### Patent Literature

Patent Literature 1: Japanese Laid-open Patent Publication No. 8-47693
Patent Literature 2: Japanese Laid-open Patent Publication No. 2001-29939

### Summary

### Technical Problem

However, according to the invention of Patent Literature 1, the waste water can be treated easily and at low cost, but there is problems in which treatment may not be performed in the case an amount of the waste water is increased relative to thermal energy (temperature, flow rate) of flue gas and an energy amount required to evaporate the increased waste water becomes large.

Further, according to the invention of Patent Literature 2, an amount of waste water can be reduced by a concentration device, but there is a problem in which output of a steam turbine may be decreased because a part of steam generated in a boiler is bled in the concentration device.

Furthermore, since the flue gas discharged from a boiler plant may contain trace amounts of toxic substances such as mercury in addition to nitrogen oxide and sulfur oxide, a countermeasure against mercury is required in order to perform water treatment by mixing waste water in other plant facility.

Therefore, providing an effective treatment technology is strongly demanded, according to which, the effluent generated in a process plant of, for example, a power plant or a chemical plant, such as the effluent discharged from a boiler, a reactor, a wet cooling tower of a condenser, a water treatment device, and the like can be treated at low cost in consideration of a countermeasure against mercury discharge without deteriorating efficiency of the boiler.

In consideration of the above problems, the present invention is directed to providing a water treatment system and a method therefor for effluent generated in a plant facility.

### Solution to Problem

In order to solve the above-mentioned problem, the first aspect of the present invention is a water treatment system including: a wet desulfurization device that removes sulfur oxide from boiler flue gas; a dewatering device that separates gypsum from desulfurization waste water which contains gypsum slurry and which is obtained from the wet desulfurization device; a mercury removing unit to which is introduced separated water that is obtained from the dewatering device, and which immobilizes heavy metals present in the separated water by inputting a chelating agent; a solid-liquid separation unit that performs solid-liquid separation with respect to solid content present in separated water obtained from the mercury removing unit; a mixing unit that mixes separated water obtained from the solid-liquid separation unit with effluent generated in a plant facility; a desalination device that removes salt content from mixed water obtained by the mixing unit; and a spray drying device that includes a spraying unit, which sprays concentrated water in which salt content has been concentrated by the desalination device, and that performs spray drying using a part of the boiler flue gas.

The second aspect of the present invention is a water treatment system including: a wet desulfurization device that removes sulfur oxide from boiler flue gas; a dewatering device that separates gypsum from desulfurization waste water which contains gypsum slurry and which is obtained from the wet desulfurization device; a mixing unit that mixes separated water obtained from the dewatering device with effluent generated in a plant facility; a reaction tank to which mixed water obtained by the mixing unit is introduced and which immobilizes heavy metals present in separated water by inputting a chelating agent; a solid-liquid separation unit that performs solid-liquid separation with respect to solid content present in mixed water obtained from the reaction tank; a desalination device that removes salt content from mixed water subjected to solid-liquid separation; and a spray drying device that includes a spraying unit which sprays concentrated water in which salt content has been concentrated by the desalination device, and that performs spray drying using a part of the boiler flue gas.

The third aspect of the present invention is the water treatment system according to the first or the second aspect further including a membrane treatment unit that performs treatment using a membrane having univalent selectivity with respect to separated water obtained after separation performed by the solid-liquid separation unit.

The fourth aspect of the present invention is the water treatment system according to any one of the first to the third aspects, wherein the desalination device removes bivalent salt content present in the effluent.

The fifth aspect of the present invention is the water treatment system according to any one of the first to the fourth aspects, wherein the desalination device includes a scale prevention agent supplying unit that supplies a scale prevention agent to the mixed water containing bivalent ions such as Ca ions; a first desalination device that is disposed at a downstream side of the scale prevention agent supplying unit and that separates the mixed water into reclaimed water and concentrated water in which the Ca ions have been concentrated; a crystallization tank that is disposed at a downstream side of the first desalination device and that is used in crystalizing gypsum from the concentrated water; a separating unit that separates the gypsum crystalized and concentrated water obtained from the first desalination device; and a second desalination device that is disposed at a downstream side of the separating unit and separates the concentrated water into reclaimed water and concentrated water in which the Ca ions have been concentrated.

The sixth aspect of the present invention is the water treatment system according to the fifth aspect, wherein the desalination device further includes a separating unit that separates concentrated water obtained from the second desalination device; and a third desalination device that is disposed at a downstream side of the separating unit and that separates the concentrated water into reclaimed water and concentrated water in which the Ca ions have been concentrated.

The seventh aspect of the present invention is the water treatment system according to the fifth aspect of the invention, further including an oxidation-reduction potentiometer that measures the oxidation-reduction potential of mixed water to be introduced into the first desalination device.

The eighth aspect of the present invention is the water treatment system according to the seventh aspect of the invention, wherein a value (X) of the oxidation-reduction potential of the mixed water, which is measured by the oxidation-reduction potentiometer, satisfies - 0.69V<X<1.358V.

The ninth aspect of the present invention is a water treatment method including: wet-desulfurizing that includes removing sulfur oxide from boiler flue gas; dewatering that includes separating gypsum from desulfurization waste water which contains gypsum slurry and which is obtained from the wet-desulfurizing; mercury-removing that includes introducing separated water which is separated at the dewatering, and immobilizing heavy metals present in the separated water by inputting a chelating agent; solid-liquid-separating that includes performing solid-liquid separation with respect to solid content present in separated water obtained from the mercury-removing; mixing separated water obtained from the solid-liquid separation unit with effluent generated in a plant facility; desalinating that includes removing salt content from mixed water obtained at the mixing; and spray-drying that includes performing spray drying of concentrated water in which the salt content has been concentrated at the desalinating, using a part of the boiler flue gas.

The tenth aspect of the present invention is a water treatment method including: wet-desulfurizing that includes removing sulfur oxide from boiler flue gas; dewatering that includes separating gypsum from desulfurization waste water which contains gypsum slurry and which is obtained from the wet-desulfurizing; mixing separated water obtained from the dewatering with effluent generated in a plant facility; depositing that includes introducing mixed water obtained at the mixing and immobilizing heavy metals present in separated water by inputting a chelating agent; solid-liquid-separating that includes performing solid-liquid separation with respect to solid content present in mixed water obtained at the depositing; desalinating that includes removing salt content from mixed water subjected to solid-liquid separation; and spray-drying that includes performing spray drying of concentrated water in which salt content has been concentrated at the desalinating, using a part of the boiler flue gas.

The eleventh aspect of the present invention is the water treatment method according to the ninth or the tenth aspect, further including membrane-treating that includes performing treatment using a membrane having univalent selectivity with respect to separated water obtained after separation performed at the solid-liquid-separating.

The twelfth aspect of the present invention is the water treatment method according to any one of the ninth to the eleventh aspects, wherein the desalinating includes removing bivalent salt content present in the effluent.

The thirteenth aspect of the present invention is the water treatment method according to any one of the ninth to the twelfth aspects, wherein the desalinating includes scale-prevention-agent-supplying that includes supplying a scale prevention agent to mixed water containing bivalent ions such as Ca ions; first-desalinating that, at a downstream side of the scale-prevention-agent-supplying, includes separating the mixed water into reclaimed water and concentrated water in which the Ca ions have been concentrated; crystallizing that, at a downstream side of the first desalinating, includes crystalizing gypsum from the concentrated water; a separating unit that separates the gypsum crystalized and concentrated water obtained from the first-desalinating; and second-desalinating that, at a downstream side of the separating unit, includes separating the concentrated water into reclaimed water and concentrated water in which the Ca ions have been concentrated.

The fourteenth aspect of the present invention is the water treatment method according to the thirteenth aspect of the invention, wherein the desalinating further includes separating concentrated water obtained from the second-desalinating; and third-desalinating that, at a downstream side of the separating, includes separating the concentrated water into reclaimed water and concentrated water in which the Ca ions have been concentrated.

The fifteenth aspect of the present invention is the water treatment method according to the ninth aspect of the present invention, further including oxidation-reduction-potential-measuring that includes measuring the oxidation-reduction potential of mixed water to be introduced at the first-desalinating.

The sixteenth aspect of the present invention is the water treatment method according to the fifteenth aspect t of the present invention, wherein a value (X) of the oxidation-reduction potential of the mixed water, which is measured at the oxidation-reduction-potential-measuring, satisfies -0.69V<X<1.358V.

### Advantageous Effects of Invention

According to the present invention, treating effluent discharged from a plant facility in an industrial waste water treatment facility becomes unnecessary, and the effluent generated in the plant can be eliminated or an amount effluent can be reduced, and further a countermeasure against mercury discharge can be implemented.

### Brief Description of Drawings

FIG. 1 is a schematic diagram illustrating a water treatment system for effluent generated in a plant facility according to a first embodiment.
FIG. 2 is a schematic diagram illustrating a spray dryer according to the first embodiment.
FIG. 3 is a configuration diagram illustrating an example of a desalination device according to the present embodiment.
FIG. 4 is a configuration diagram illustrating an example of a different desalination device according to the present embodiment.
FIG. 5 is a configuration diagram illustrating an example of a different desalination device according to the present embodiment.
FIG. 6 is a configuration diagram illustrating an example of a different desalination device according to the present embodiment.
FIG. 7 is a configuration diagram illustrating an example of a different desalination device according to a second embodiment.
FIG. 8 is a schematic diagram illustrating a water treatment system for effluent generated in a plant facility according to a third embodiment.
FIG. 9 is a schematic diagram illustrating a water treatment system for effluent generated in a plant facility according to a fourth embodiment.
FIG. 10 is a microscope photograph of gypsum obtained by crystallization.
FIG. 11 is a microscope photograph of the gypsum obtained by crystallization.
FIG. 12 is a schematic diagram illustrating an example of a separation device based on a cold lime process.
FIG. 13 is a schematic diagram illustrating a water treatment system for effluent generated in a plant facility according to a fifth embodiment.
FIG. 14 is a diagram illustrating a simulation result of pH dependence of a gypsum precipitation amount.
FIG. 15 is a diagram illustrating a simulation result of pH dependence of a calcium carbonate precipitation amount.
FIG. 16 is a diagram illustrating a simulation result of pH dependence of a silica precipitation amount.

### Description of Embodiments

Preferred embodiments of the present invention will be described in detail below with reference to the attached drawings. Note that the present invention is not limited to the embodiments and is intended to include configurations in which the respective embodiments may be combined in the case where there is a plurality of embodiments.

### First Embodiment

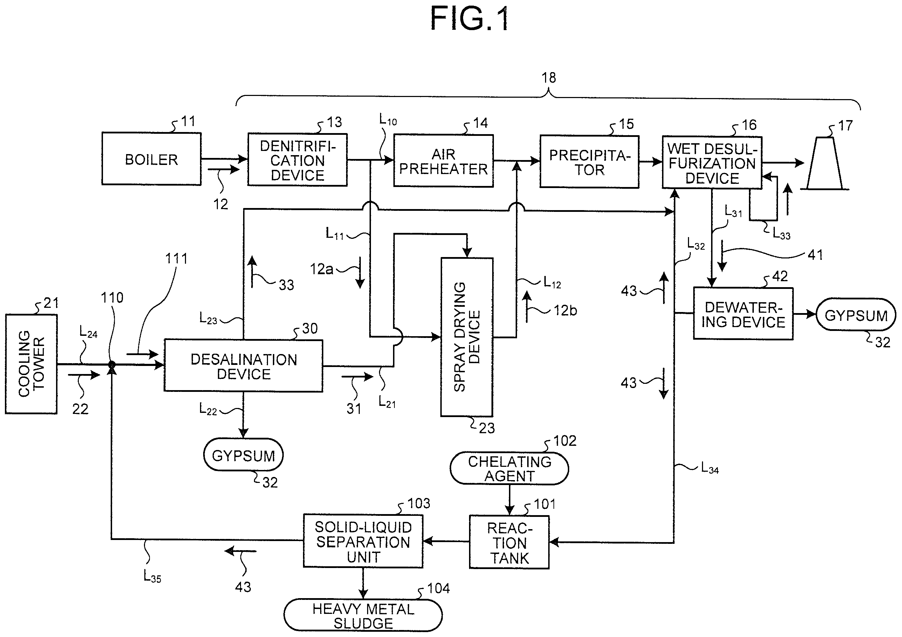

FIG. 1 is a schematic diagram illustrating a water treatment system for effluent generated in a plant facility according to a first embodiment.

As illustrated in FIG. 1, the water treatment system for the effluent generated in a plant facility according to the present embodiment includes: a flue gas treatment system 18 that treats boiler flue gas (herein after referred to as "flue gas") 12 from a boiler 11; a desalination device 30 that removes salt content from mixed water obtained by immobilizing mercury present in desulfurization waste water 41 at a mercury removing unit and mixing with effluent 22 at a mixing unit 110 ; and a spray drying device 23 that spray-dries, by using a part of 12a of the boiler flue gas 12, concentrated water 31 that has been treated by the desalination device 30.

The flue gas treatment system 18 illustrated in FIG. 1 is a device that removes toxic substances such as nitrogen oxide (NOₓ), sulfur oxide (SOₓ), mercury (Hg) from the flue gas 12 in the case of a coal fired boiler 11 using coal as fuel, a heavy oil fired boiler 11 using heavy oil as the fuel or the like, for example. Further, the flue gas treatment system 18 includes a denitrification device 13 that removes nitrogen oxide, an air preheater 14 that recovers heat of the flue gas 12, a precipitator 15 that removes soot dust present in the flue gas 12 after heat recovery, a wet desulfurization device 16 that removes sulfur oxide contained in the flue gas 12 after dust removal, and a stack 17 that exhausts purged gas purged after desulfurization.

According to the present embodiment, sulfur oxide present in the flue gas 12 is removed by a desulfurization method based on a limestone/gypsum process as the wet desulfurization device 16. In the case of removing sulfur oxide, limestone slurry (not illustrated) is supplied and gypsum 32 is separated by a dewatering device 42 from gypsum slurry which is desulfurization waste water 41 discharged from the wet desulfurization device 16 via a discharge line L₃₁. A separated water 43 separated by the dewatering device 42 is returned to the wet desulfurization device 16 as makeup water via a return line L₃₂. Note that a reference sign L₃₃ indicates a slurry circulation line that circulates the gypsum slurry for desulfurization.

The present embodiment includes the dewatering device 42 that separates the gypsum 32 from the desulfurization waste water 41 which contains the gypsum slurry and which is obtained from the wet desulfurization device 16, a reaction tank 101 which is a mercury removing unit in which the separated water 43 obtained from the dewatering device 42 is introduced via a separated water line L₃₄, and mercury present in the separated water 43 is removed by inputting a chelating agent 102, and a solid-liquid separation unit 103 that performs solid-liquid separation with respect to solid content (heavy metal sludge) 104 present in the separated water 43 obtained from the reaction tank 101; and is aimed to immobilize mercury (Hg) present in the separated water 43 by adding the chelating agent 102.

The chelating agent 102 is added into the reaction tank 101 by an adding unit not illustrated, and mercury (Hg) present in the separated water 43 is treated by adsorbing the same to the chelating agent 102.

In the reaction tank 101, for example, pH adjuster (alkaline agent) to adjust pH, coagulant (e.g., aluminum sulfate, PAC, salt iron, etc.), flocculant such as polymer flocculant may also be added together with the chelating agent 102.

The mercury present in the separated water 43 forms an insoluble polymer complex by the chelating agent 102 which is a heavy metal scavenger, and polymer molecules are flocculated one another by aluminum sulfate or the like, for example.

After that, the heavy metal (Hg, etc.) sludge 104 is separated by the solid-liquid separation unit 103, the separated water obtained from the solid-liquid separation unit 103 is discharged from the separated water discharge line L₃₅, and mixed at the mixing unit 110 as mixed water 111 with the effluent 22 obtained from a cooling tower 21.

As the solid-liquid separation unit 103, a flocculation sedimentation tank, a flocculation membrane separation tank, a membrane separation tank, a sand filtration tank, etc. can be used. In the case where high water quality is required, the water quality of the separated water 43 subjected to solid-liquid separation may be improved by passing chelating resin.

The pH adjuster is adopted to change the separated water 43 to an alkaline side, and for example, lime hydrate Ca(OH)₂, sodium hydroxide (NaOH), etc. can be used so as to adjust a pH range (e.g., around pH7) at which, for example, aluminum sulfate can be flocculated.

In the embodiment of FIG. 1, the description has been given by using the reaction tank 101 as the mercury removing unit; however, the present invention is not limited thereto, and mercury present in the separated water 43 may be removed by using, for example, a gypsum crystallizer, a solidifying tank, an ion exchanger, and the like.

The gypsum crystallizer takes in and coprecipitates mercury as mercury sulfate (HgSO₄) at the time of generating gypsum (CaSO₄), and removes the mercury present in the separated water 43.

A sedimentation device adds iron sulfide, sodium sulfide, etc. to the separated water 43, for example, and immobilizes the mercury as mercury sulfide (HgS) by the chemical reaction shown below.

Hg²⁺+S²⁻→HgS↓

Note that the immobilized mercury sulfide is removed at the flocculation sedimentation tank, the flocculation membrane separation tank, the sand filtration tank, an activated carbon adsorption tank, and so on.

The ion exchanger makes the separated water 43 pass through each of cationic exchange resin and anionic exchange resin, and adsorbs Hg²⁺ to the cationic exchange resin and also adsorbs mercury complexes (HgCl³⁻, HgCl₄²⁻, HgS₂²⁻, etc.) to the anionic exchange resin for removal.

Note that in the case of using the sedimentation device, the solid-liquid separation unit 103 is not needed because solid-liquid separation has been already carried out by the sedimentation device. Further, in the case of using a chelate resin tower, sludge is not generated. The solid-liquid separation unit 103 is not needed as well.

According to the present embodiment, as the mercury removing unit, the chelating agent 102 is added to perform sedimentation at the reaction tank 101, and the separated water 43 containing the sediment is separated at the solid-liquid separation unit 103, and mercury, etc. are removed as the heavy metal sludge 104. After that, the separated water 43 obtained from the solid-liquid separation unit 103 is mixed at the mixing unit 110 with the effluent 22 generated in the plant facility, and salt content present in the mixed water 111 is removed by the desalination device 30.

Further, the concentrated water 31 in which salt content has been concentrated by the desalination device 30 is introduced into the spray drying device 23, and spray-dried by using the part of 12a of the flue gas 12 from the boiler 11.

As a result, in the concentrated water 31 introduced into the spray drying device 23, mercury is removed from the separated water 43 obtained by separating the gypsum 32 from the desulfurization waste water 41 discharged from the wet desulfurization device 16. Therefore, mercury is prevented from being eluted from a spray-dried product at the time of spray-drying the concentrated water 31 discharged from the desalination device 30. Further, mercury content in the gypsum 32 can be reduced at the desalination device 30.

As a result, mercury content in dried salt subjected to spray drying can be reduced by removing mercury from the desulfurization waste water 41 obtained from the wet desulfurization device 16.

The water treatment system according to the present embodiment includes: the wet desulfurization device 16 that removes sulfur oxide present in the boiler flue gas 12 obtained from the boiler 11; the dewatering device 42 that separates gypsum 32 from the desulfurization waste water 41 which contains the gypsum slurry and which is obtained from the wet desulfurization device 16; the mercury removing unit (e.g., reaction tank 101) in which the separated water 43 from the dewatering device 42 is introduced and the chelating agent 102 is input so as to immobilize the heavy metal present in the separated water 43; the solid-liquid separation unit 103 that performs solid-liquid separation with respect to solid content (heavy metal sludge) 104 present in the separated water 43 obtained from the mercury removing unit; the mixing unit 110 that mixes the separated water 43 obtained from the solid-liquid separation unit 103 with the effluent 22 generated in the plant facility; the desalination device 30 that removes salt content from the mixed water 111 mixed by the mixing unit 110; and the spray drying device 23 that includes a spray unit, which sprays the concentrated water 31 in which salt content has been concentrated by the desalination device 30, and that performs spray drying using the part 12a of the boiler flue gas 12.

As a result, by removing mercury from the desulfurization waste water 41, it is possible to reduce the mercury content in the gypsum generated in the gypsum crystallization process at the desalination device 30 and also the mercury content in the salt obtained in the spray drying process at the spray drying device 23 in the later stage. Due to this, an amount of mercury eluted from the salt obtained from spray drying can be reduced, too.

As illustrated in FIG. 1, the spray drying device 23 includes: a gas introducing unit to which the part 12a of the flue gas 12 is introduced via a branch line L₁₁ branched from an flue gas line L₁₀; and the spray unit that sprinkles or sprays the concentrated water 31. Subsequently, the concentrated water 31 sprinkled by heat of the part 12a of the introduced flue gas 12 is evaporated and then dried.

Further, according to the present embodiment, the part 12a of the flue gas 12 flowing into the air preheater 14 is branched via the branch line L₁₁ from the flue gas line L₁₀. Therefore, the flue gas 12 has a high temperature (350 to 400°C) and spray drying can be efficiently performed for the concentrated water 31. Meanwhile, a flue gas 12b having contributed to drying is returned to a flue gas line L₁₀ located between the air preheater 14 and the precipitator 15 via a gas feeding line L₁₂. Meanwhile, the flue gas 12b having contributed to drying may also be returned to one or plural points on a downstream side of the air preheater 14 and an upstream side of the precipitator 15.

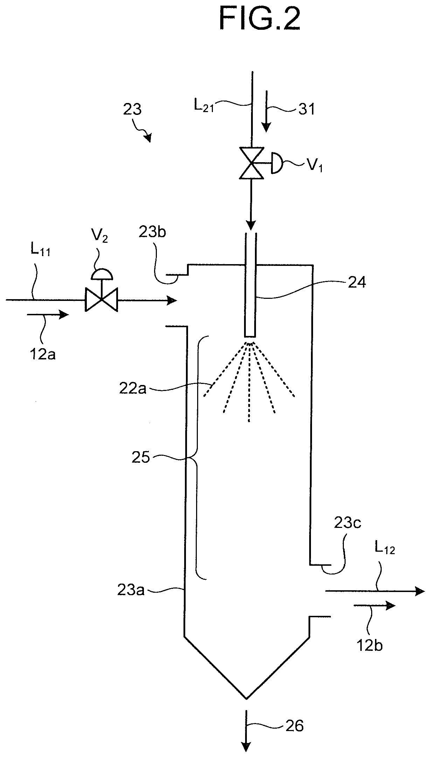

FIG. 2 is a schematic diagram illustrating a spray drying device according to the first embodiment. As illustrated in FIG. 2, the spray drying device 23 of the present embodiment includes: a spray nozzle 24 disposed inside a spray drying device body 23a and configured to spray the effluent 22 introduced from the cooling tower 21 via an introduction line L₂₁; an introduction port 23b disposed at the spray drying device body 23a and configured to introduce the part 12a of the flue gas 12 which dries spraying liquid 22a, a drying area 25 disposed inside the spray drying device body 23a and configured to dry the effluent 22 by using the part 12a of the flue gas 12; and a discharge port 23c which discharges the flue gas 12b having contributed to drying. Meanwhile, a reference sign 26 indicates solids separated at the spray drying device body 23a, and reference signs V₁ and V₂ indicate flow passage open/close valves.

Here, balance between a gas amount of the part 12a of the flue gas 12 introduced into the spray drying device 23 and a liquid spray amount of the concentrated water 31 will be exemplified.

When the liquid amount of the concentrated water 31 is sprayed at 100 kg/H from the spray nozzle 24 per 1000 m³/H of the gas amount of the part 12a of the flue gas 12 introduced, a gas temperature is decreased by 200°C.

Additionally, moisture content in the gas is increased by 10%. For example, in the case where the moisture content in the gas of the part 12a of the flue gas to be introduced before spraying is 9%, the moisture content in the gas of the flue gas 12b having contributed to drying becomes 19% after spraying, thereby increasing the moisture content by approximately 10%.

Such decrease of the gas temperature by 200°C is almost equivalent to the temperature of the flue gas 12 having passed the air preheater 14.

However, since an amount of the part 12a of the flue gas 12 bypassed to the spray drying device 23 is approximately 5%, the moisture increase is about 10%/20 = 0.5% in the case where the bypassed flue gas 12b having contributed to drying is returned to the flue gas line L₁₀.

Further, the gas temperature of the flue gas 12 which passes through the flue gas line L₁₀ is decreased by 200°C in the same manner because air is preheated by the air preheater 14 and then supplied to the boiler 11. Therefore, there is no temperature difference when the flue gas is returned after bypassed. More specifically, in the case where a gas temperature on an entrance side of the air preheater 14 is 350°C, the gas temperature which is decreased after the gas has passed through the air preheater 14 becomes almost equivalent to the gas temperature of the flue gas 12b which has passed through the branch line L₁₁ and the gas feeding line L₁₂ and contributed to drying at the spray drying device 23 because both temperatures are decreased by 200°C in the same manner.

According to the present embodiment, the concentrated water 31 discharged from the cooling tower 21 and discharged from the desalination device 30 is introduced into the spray drying device 23 via the spray nozzle 24, and the spraying liquid 22a is dried by the heat of the part 12a of the flue gas 12. Therefore, separate treatment for the effluent 22 by using an industrial waste water treatment facility is not required, and the effluent 22 generated in the plant can be eliminated.

According to the present embodiment, a description will be given an example in which blow waste water from the cooling tower 21 is used as the effluent 22 generated in the plant facility, but the present invention is not limited thereto and can be applied to all effluent discharged from a power plant or a chemical plant.

Here, as exemplary waste water from a coal fired power station and an oil-fired power station, namely, as the effluent constantly generated except for cooling water, it is possible to exemplify reclaimed waste water of a condensate desalination device, reclaimed waste water of a prefilter of the condensate desalination device, reclaimed waste water of a clarifier filter, reclaimed waste water of a makeup water treatment device, gray water of laboratory, waste water of a desulfurization device, gray water, sampling waste water, living drainage, spillage of ash dumping, cleaning waste water of a coal unloading and transporting facility, and so on. As non-constant wastewater excluding the above waste water constantly generated, it is possible to exemplify cleaning waste water of an air preheater, cleaning waste water of a gas gas heater (GGH), cleaning waste water of a stack, chemical cleaning waste water, start-up waste water, waste water of a coal storing facility, waste water of a coal unloading pier, waste water of a yard of tanks, and so on. Further, as the cooling water, it is possible to exemplify bearing cooling water, condenser cooling water, etc. besides the cooling water of the cooling tower.

Note that the denitrification device 13 disposed at the flue gas treatment system 18 of the present embodiment is not indispensable, and the denitrification device 13 illustrated in FIG. 1 can be omitted in the case where concentration of nitrogen oxide and concentration of mercury in the flue gas 12 obtained the boiler 11 is very low or these substances are not contained in the flue gas 12.

Further, in the case where temperature decrease is little, a returning destination of the gas feeding line L₁₂ for the flue gas 12b having contributed to drying and obtained from the spray drying device 23 may be set at the upstream side of the air preheater 14.

According to the present embodiment, various kinds of effluent generated in, for example, the process plant facility of the power plant and the chemical plant can be effectively treated at low cost without deteriorating efficiency of the boiler.

The water treatment system for the mixed water 111 obtained by mixing the separated water 43 with the effluent 22 generated in the plant facility according to the present embodiment includes the desalination device 30 as illustrated in FIG. 1 in order to remove salt content present in the effluent 22 from the cooling tower 21. Further, the concentrated water 31 desalinated by the desalination device 30 is introduced into the spray drying device 23 via a supply line L₂₁. Note that a reference sign L₂₄ in FIG. 1 indicates an introduction line to introduce the effluent 22 into the desalination device 30.

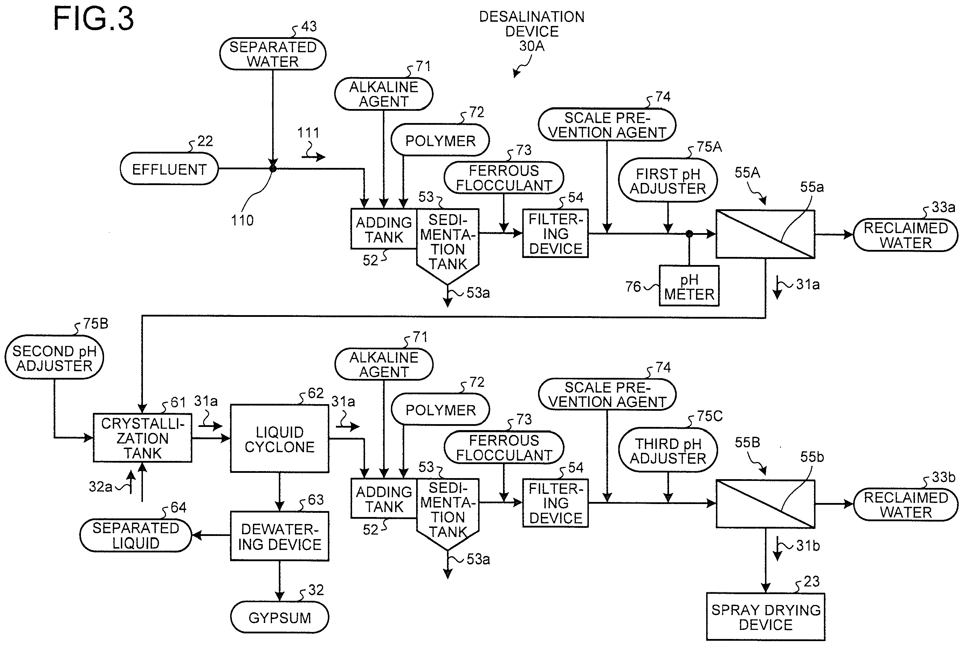

Next, the water treatment system for the mixed water 111 will be described by using FIGS. 1 and 3.

FIG. 3 is a configuration diagram illustrating an exemplary desalination device according to the present embodiment.

As illustrated in FIG. 3, a desalination device 30A according to the present embodiment includes: a scale prevention agent supplying unit that supplies a scale prevention agent 74 to the mixed water 111 obtained by mixing the separated water 43 with the effluent 22 containing bivalent ions such as Ca ions; a first desalination device 55A which is disposed at the downstream side of the scale prevention agent supplying unit and separates the effluent 22 into reclaimed water 33a and concentrated water 31a in which the Ca ions, etc. have been concentrated; a crystallization tank 61 which is disposed at the downstream side of the first desalination device 55A, supplies seed crystal gypsum 32a to the concentrated water 31a of the first desalination device 55A, and crystallizes the gypsum 32 from the concentrated water 31a obtained from the first desalination device 55A; a liquid cyclone 62 which is a separating unit that separates crystallized gypsum 32 from the concentrated water 31a obtained from the first desalination device 55A; and a second desalination device 55B which is disposed at the downstream side of the liquid cyclone 62 and separates the concentrated water 31a into reclaimed water 33b and concentrated water 31b in which the Ca ions, etc. have been concentrated. The desalination device 30A performs desalination with the two-stage desalination devices.

In the embodiment illustrated in FIG. 3, a reverse osmosis membrane device (RO) including reverse osmosis membranes 55a, 55b is used in the first desalination device 55A and the second desalination device 55B. Instead of the reverse osmosis membrane device, for instance, a nano-filtration membrane (NF), an electrodialyzer (ED), an electrodialysis reversal unit (EDR), an electro deionization unit (EDI), an ion exchanger resin unit (IEx), a continuous deionization (CD1), an evaporator, etc. may also be suitably applied.

The crystallization tank 61 includes the liquid cyclone 62 which is the separating unit, and the separated gypsum 32 is dewatered by a dewatering device 63. Meanwhile, the liquid cyclone 62 as the separating unit can be omitted as a modified example of the present embodiment. In this case, a bottom portion of the crystallization tank 61 is directly connected to the dewatering device 63.

The scale prevention agent 74 has functions to suppress generation of a crystal nucleus in the mixed water 111, and also suppress growth of the crystal by adsorbing itself to a surface of the crystal nucleus (seed crystal, small-diameter scale precipitated due to supersaturation, etc.) contained in the effluent 22.

Further, the scale prevention agent 74 has a function to disperse particles in moisture of the precipitated crystal, etc. (prevent flocculation). The scale prevention agent 74 is, for example, a phosphonic acid-based scale prevention agent, polycarboxylic acid-based scale prevention agent, mixture of these scale prevention agents, and the like. As an example of the scale prevention agent 74, "FLOCON260 (trade name, manufactured by BWA Water Additives)" can be exemplified, but the present invention is not limited thereto.

Further, in the case where Mg²⁺ is contained in the effluent 22, it is possible to use a scale prevention agent that prevents precipitation of the scale containing magnesium (e.g., magnesium hydroxide, magnesium carbonate, and magnesium sulfate) in the effluent 22. In the following, this scale prevention agent is referred to as a "magnesium scale prevention agent".

As the magnesium scale prevention agent, there is polycarboxylic acid-based scale prevention agent or the like. More specifically, "FLOCON295N (trade name)" manufactured by BWA Water Additives can be exemplified.

According to the present embodiment, a first pH adjusting unit that introduces, for example, acid which is a first pH adjuster 75A, after supplying the scale prevention agent 74, is connected to a flow passage on the upstream side of the first desalination device 55A.

As the first pH adjuster 75A, the acid (e.g., sulfuric acid) or an alkaline agent (e.g., calcium hydroxide or sodium hydroxide) is supplied.

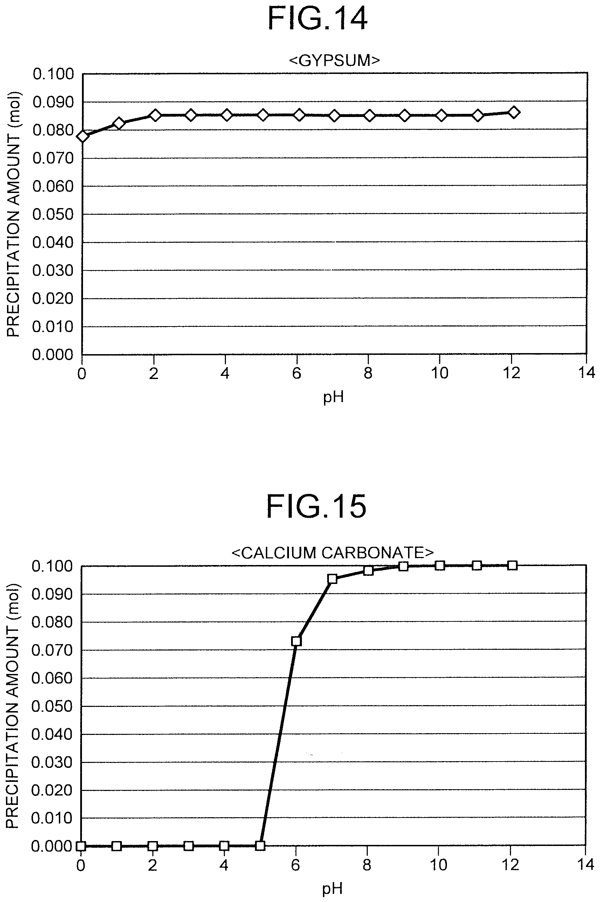

Here, precipitation behavior of the gypsum, silica, and calcium carbonate present in the effluent 22 will be described with reference to FIGS. 14 to 16.

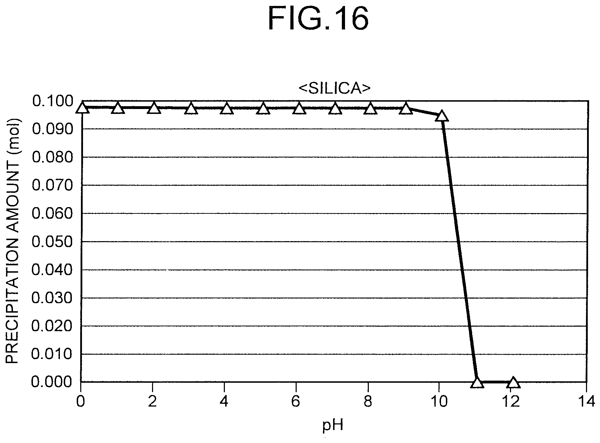

FIG. 14 is a diagram illustrating a simulation result of pH dependence of a gypsum precipitation amount. FIG. 15 is a diagram illustrating a simulation result of pH dependence of a calcium carbonate precipitation amount. FIG. 16 is a diagram illustrating a simulation result of pH dependence of a silica precipitation amount. In these drawings, a horizontal axis represents pH and a vertical axis represents the precipitation amounts (mol) of the gypsum, calcium carbonate, and silica respectively. The simulation is carried out by using simulation software of OLI Systems Inc. under the conditions that 0.1 mol/L of each of solid constituents is mixed into the water, and then H₂SO₄ is added as acid and Ca(OH)₂ is added as alkali.

It can be grasped from FIG. 14 that precipitation of the gypsum has no pH dependence, and the gypsum can be precipitated in an entire pH area. However, in the case of adding a calcium scale prevention agent, the gypsum exists in a state dissolved in the water in a high pH area. According to FIG. 15, calcium carbonate is precipitated when the pH exceeds pH 5. According to FIG. 16, silica tends to be dissolved in the water when the pH becomes pH 10 or higher.

Therefore, considering the above precipitation behavior of the gypsum (calcium sulfate), silica, and calcium carbonate in the mixed water 111, first pH adjustment to third pH adjustment described below are performed.

### 1) First pH adjustment mode (pH 10 or higher)

In the first pH adjustment mode, the pH in the mixed water 111 is measured by a pH meter 76 on the upstream side of the first desalination device 55A, and a pH value is controlled to be a predetermined pH 10 or higher.

The reason is that silica is dissolved at pH 10 or higher as illustrated in FIG. 16.

In the case of the first pH adjustment, supplied is an amount of the scale prevention agent (calcium scale prevention agent) 74 which suppresses adhesion of the gypsum and calcium carbonate as substances to be scaled at the reverse osmosis membrane 55a.

### 2) Second pH adjustment mode (pH 10 or lower)

In the second pH adjustment mode, the pH in the mixed water 111 is measured by the pH meter 76 on the upstream side of the first desalination device 55A, and the pH value is controlled to be a predetermined pH 10 or lower.

The reason is that silica is precipitated at pH 10 or lower as illustrated in FIG. 16.

In the case of the second pH adjustment, supplied is an amount of the scale prevention agent 74 which suppresses adhesion of all of the gypsum, calcium carbonate, and silica as the substances to be scaled at the reverse osmosis membrane 55a.

Here, as the scale prevention agent 74 for silica, two kinds of prevention agents are used, which are the calcium scale prevention agent and an agent which prevents silica from being precipitated as scale in treated water (referred to as "silica scale prevention agent"). As the silica scale prevention agent, there are polycarboxylic acid-based scale prevention agent and a mixture thereof. More specifically, "FLOCON260 (trade name)" manufactured by BWA Water Additives can be exemplified.

### 3) Third pH adjustment mode (pH 6.5 or lower)

In the third pH adjustment mode, the pH in the mixed water 111 is measured by the pH meter 76 on the upstream side of the first desalination device 55A, and the pH value is controlled to be a predetermined pH 6.5 or lower.

The reason is that calcium carbonate is dissolved at pH 6.5 or lower as illustrated in FIG. 15.

In the case of the third pH adjustment, supplied is an amount of scale prevention agent (calcium scale prevention agent, silica scale prevention agent) 74 which suppresses adhesion of the gypsum and silica as the substances to be adhered to the reverse osmosis membrane 55a.

Table 1 is a summary of the first pH adjustment mode to the third pH adjustment mode.

**Table 1**

| | pH | | |
|---|---|---|---|
| | 10 or higher | 10 to 6.5 | 6.5 or lower |
| Gypsum | ○ | ○ | ○ |
| Calcium carbonate | ○ | ○ | × |
| Silica | × | ○ | ○ |

| | | | |
|---|---|---|---|
| × : Dissolved (No scale prevention agent supplied) ○ : Precipitated (Scale prevention agent supplied) | | | |

As illustrated in Table 1, in the case where the pH is 10 or higher, the scale prevention agent (calcium scale prevention agent) 74 is supplied (indicated by o in the Table) in order to suppress scale of the gypsum and calcium carbonate. Since silica is dissolved, supplying the scale prevention agent is not required (indicated by × in the Table).

Further, in the case where the pH is 10 or lower and 6.5 or higher, the scale prevention agents (calcium scale prevention agent and silica scale prevention agent) 74 are supplied in order to suppress scale of all of the gypsum, calcium carbonate, and silica (indicated by ○ in the Table).

Further, in the case where the pH is 6.5 or lower, the scale prevention agents (calcium scale prevention agent and silica scale prevention agent) 74 are supplied in order to suppress scale of the gypsum and silica (indicated by ○ in the Table). Since the calcium carbonate is dissolved, the calcium scale prevention agent is supplied only to prevent scale of the gypsum. Therefore, the supply amount is less than the case of the second pH adjustment (indicated by × in the Table).

When the concentration of silica in the concentrated water 31a after concentration by the first desalination device 55A becomes a predetermined concentration or higher, there is a limit in capacity of the silica scale prevention agent. Therefore, preferably, in the case where the concentration of silica is the predetermined concentration (e.g., 200 mg/L) or lower, a process of the first, second, or third pH adjustment is performed, and in the case where the concentration of silica is the predetermined concentration (e.g., 200 mg/L) or higher, the process of the first pH adjustment (silica dissolution) is performed.

Further, a second pH adjusting unit that introduces acid which is a second pH adjuster 75B is connected to the crystallization tank 61. Introducing the acid which is the second pH adjuster 75B may also be connected to a line on the upstream of the crystallization tank 61.

Thus, the first pH adjuster 75A is not limited to the acid. For example, silicon oxide (SiO₂) can be prevented from gelling by keeping pH on the alkaline side. On the other side, when pH is made to the alkaline side, calcium carbonate (CaCO₃) and magnesium hydroxide (Mg(OH)₂) may be precipitated. Because of this, scale generation is prevented by adding the scale prevention agent 74.

Therefore, preferably, the first pH adjuster 75A to be supplied on the upstream side of the first and second desalination devices 55A, 55B is acid or alkali.

Further, preferably, the second pH adjuster 75B to be supplied into the crystallization tank 61 is acid. Here, the reason for limiting, to the acid, the second pH adjuster 75B to be supplied into the crystallization tank 61 is to deactivate calcium-based scale prevention agent 74 and precipitate calcium as the gypsum (CaSO₄), for example.

Meanwhile, in the case where the scale prevention agent 74 is carboxylic acid-based, H⁺ at a distal end of carboxyl group is dissociated to be -COO⁻ ··· Ca²⁺ ··· ⁻OOC-, and COO⁻ is bound to Ca²⁺. In the case of lowering the pH to make an acidic state, H⁺ at the distal end of carboxyl group is not dissociated to be -COOH Ca^{2 +} HOOC-, and also binding between the carboxyl group and a calcium ion Ca²⁺ is released. Due to this, concentration of ionized calcium is increased and supersaturated, thereby precipitating calcium salt such as the gypsum.

In the water treatment system of the present embodiment, a sedimentation tank 53 and a filtering device 54 may be disposed on the upstream of a supplying unit of the scale prevention agent 74. Further, an oxidation unit (not illustrated) that supplies an oxidation agent such as air to perform oxidation may be disposed at the upstream of the sedimentation tank 53.

Further, the sedimentation tank 53 and the filtering device 54 are disposed between the liquid cyclone 62 and the second desalination device 55B in the same manner. In a flow passage between the filtering device 54 and the second desalination device 55B, acid or the like which is a third pH adjuster 75C is introduced.

In the case of the third pH adjuster 75C also, acid or alkali can be used same as the first pH adjuster 75A.

A method for treating the mixed water 111 will be described by using the water treatment system illustrated in FIG. 3.

Here, exemplary properties of the effluent 22 obtained from the cooling tower 21 and treated by the present invention are that the pH value is 8 and concentrations of ions are as follows: Na ion is 20 mg/L, K ion is 5 mg/L, Ca ion is 50 mg/L, Mg ion is 15 mg/L, HCO₃ ion is 200 mg/L, Cl ion is 200 mg/L, SO₄ ion is 120 mg/L, PO₄ ion is 5 mg/L, and SiO₂ ion is 35 mg/L. Among these ions, the concentrations of Ca ion, Mg ion, SO₄ ion, HCO₃ ion are high, and scale (CaSO₄, CaCO₃, etc.) is generated by reaction of these existing ions.

### <Pretreatment Process>

First, metal ions present in the effluent 22 are roughly removed as metal hydroxide at the sedimentation tank 53 and the filtering device 54.

In the case where the effluent 22 is highly acidic, an alkaline agent (e.g., Ca(OH)₂) 71 and polymer (e.g., anionic polymer (trade name: Hishifloc H₃O₅ manufactured by Mitsubishi Heavy Industries Mechatronics Systems Ltd.) 72 are input to the effluent 22 at an adding tank 52 adjacent to the upstream side of the sedimentation tank 53, and pH inside the sedimentation tank 53 is controlled be in an alkaline pH area (e.g., pH: 8.5 to 11).

In this pH area, solubility of calcium carbonate and metal hydroxide is low, and when calcium carbonate and metal hydroxide is supersaturated, the calcium carbonate and metal hydroxide are precipitated and deposit on a bottom portion of the sedimentation tank 53.

Further, solubility of metal hydroxide depends on pH. The more acidic the metal ions are, the higher the solubility in water is. Since most of the metal hydroxide has low solubility in the above-mentioned pH area, the metals contained in the effluent 22 deposit on the bottom portion of the sedimentation tank 53 as the metal hydroxide. Here, sediment 53a is separately discharged from the bottom portion for treatment.

The effluent 22 which is supernatant liquid inside the sedimentation tank 53 is discharged from the sedimentation tank 53. Ferrous flocculant (e.g., FeCl₃) 73 is added to the discharged effluent 22, and the solid content of calcium carbonate, metal hydroxide, etc. present in the effluent 22 is flocculated together with Fe(OH)₃.

The mixed water 111 is fed to the filtering device 54. The solid content flocculated together with Fe(OH)₃ is removed by the filtering device 54.

Among the metals, Fe is easily precipitated as a hydroxide in the case of an acidic state. When the mixed water 111 containing a large amount of Fe ions is flown into the first desalination device 55A, scale containing Fe is generated in the first desalination device 55A, and further iron hydroxide, etc. deposit in the crystallization tank 61. Due to this, in the present embodiment, treatment conditions at the sedimentation tank 53, an adding amount of FeCl₃, etc. are suitably set such that the concentration of Fe ions in the mixed water 111 becomes 0.05 ppm or lower after pretreatment with alkali and before flowing into the first desalination device 55A, considering prevention of scale generation in the first desalination device 55A. Note that the pretreatment can be omitted depending on water quality of the mixed water 111.

### <Scale Prevention Agent Supply Process>

In the supplying unit that supplies the scale prevention agent 74, a predetermined amount of the scale prevention agent 74 is supplied to the mixed water 111 from a tank not illustrated. A control unit not illustrated controls the concentration of the scale prevention agent 74 to be a predetermined value set in accordance with properties of the mixed water 111.

### <First pH Adjustment Process>

The supplying unit of a pH adjuster 75 in a first pH adjustment process controls, by using the scale prevention agent 74, the pH of the mixed water 111 at an entrance side of the first desalination device 55A so as to be a value (e.g., about pH 5.5) at which precipitation of scale containing Ca (gypsum, calcium carbonate) is suppressed. This control includes measuring the pH of the mixed water 111 at the entrance side of the first desalination device 55A.

Meanwhile, this first pH adjustment process is omitted in a modified example in which the first pH adjusting unit is not provided.

### <Upstream side Separation Process>

The pH-adjusted mixed water 111 is treated in the first desalination device 55A. Permeated water which has permeated the reverse osmosis membrane 55a of the first desalination device 55A is recovered as the reclaimed water 33a from which salt content has been removed.

In this upstream side separation process, ions contained in the mixed water 111 and the scale prevention agent 74 cannot permeate the reverse osmosis membrane 55a. Therefore, highly concentrated water 31a having the high ion concentration is present on a non-impermeable side of the reverse osmosis membrane 55a. The concentrated water 31a of the first desalination device 55A is fed to the crystallization tank 61. For example, in the case of using a different desalination device such as a continuous deionization, the mixed water 111 is also separated into treated water and the concentrated water having the high ion concentration.

Here, in the case where the pH is high in the first desalination device 55A, silica exists on a surface of the reverse osmosis membrane 55a as ionic silica.

More specifically, in the case where the concentration is 200 mg SiO₂/L or higher, for example, silica can exist as the ionic silica when the pH is high.

In contrast, in the case where the pH is low in the first desalination device 55A, silica is precipitated as gelled silica.

More specifically, in the case where the concentration is 200 mg SiO₂/L or lower, for example, silica can exist as the ionic silica when the pH is high.

In the case where the concentration is 200 mg SiO₂/L or lower, silica can be prevented from gelling (or gelling of silica can be delayed) by using the scale prevention agent 74 when the pH is low.

Further, in the case where the pH is high in the first desalination device 55A, calcium ions (Ca²⁺) may be precipitated on the surface of the reverse osmosis membrane 55a as a crystal CaCO₃, but such precipitation can be prevented by supplying the scale prevention agent 74 for Ca.

Further, in the case where the pH is high in the first desalination device 55A, magnesium ions (Mg²⁺) may be precipitated on the surface of the reverse osmosis membrane 55a as crystals Mg(OH)₂, MgSiO₃ in the high pH, but such precipitation can be prevented by supplying the scale prevention agent 74 for Mg.

### <Second pH Adjustment Process>

In a control unit not illustrated, pH of the concentrated water 31a in the crystallization tank 61, obtained from the first desalination device 55A, is controlled to be a value (e.g., pH 4 or lower) at which the gypsum present in the concentrated water 31a can be precipitated by decreasing the functions of the scale prevention agent 74.

### <Crystallization Process>

The pH-adjusted concentrated water 31a by the second pH adjuster 75B is stored in the crystallization tank 61. In the case of providing a seed crystal supplying unit, the seed crystal supplying unit adds the seed crystal gypsum 32a of the seed crystal to the concentrated water 31a in the crystallization tank 61.

By adding the second pH adjuster 75B, the functions of the scale prevention agent 74 are deactivated in the crystallization tank 61. Due to this, the gypsum 32 supersaturated in the crystallization tank 61 is crystallized. In the case of separately inputting the seed crystal gypsum 32a as the seed crystal in this crystallization process, the gypsum 32 is grown as the crystal by having this input seed crystal gypsum 32a as a nucleus.

Here, a part of the gypsums 32 separated by the dewatering device 63 is used as the seed crystal gypsum 32a.

In the case of supplying the seed crystal gypsum 32a, the first pH adjustment by adding the first pH adjuster 75A is not performed, and the pH permeating the first desalination device 55A may be set as the alkaline side. In this case, purity of the gypsum 32 is slightly more deteriorated than the case where pH is adjusted by adding the acid which is the first pH adjuster 75A. When the pH is set to the alkaline side, a crystal of calcium carbonate (CaCO₃) is generated. Therefore, purity is deteriorated because calcium carbonate (CaCO₃) is mixed in the gypsum (CaSO₄).

The gypsum 32 having low water content and high purity can be precipitated by adjusting pH to the predetermined value in the second pH adjustment process in which the acid is added as the second pH adjuster 75B like the present embodiment and by adding the seed crystal gypsum 32a in the crystallization process.

Note that silica present in the concentrated water 31a gels in the low pH, and reacts with Ca²⁺ and Mg²⁺ present in the concentrated water 31a, thereby forming a reactant of for example CaSiO₃ or MgSiO₃ and precipitating the same.

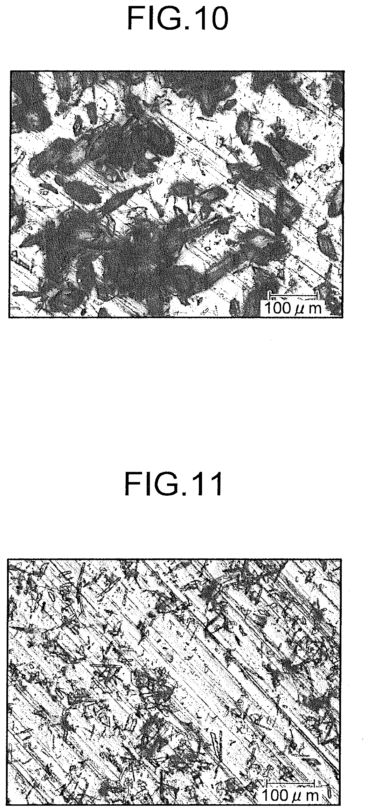

Here, FIGS. 10 and 11 are microscope photographs of the gypsum obtained in crystallization. FIG. 10 is an observation result in the case of adding the seed crystal gypsum 32a which is the seed crystal as a condition. FIG. 11 is an observation result in the case of not adding the seed crystal gypsum 32a which is the seed crystal as a condition.

As illustrated in FIG. 10, in the case of adding the seed crystal gypsum 32a, large gypsum is precipitated. Generally, the larger the precipitated gypsum is, the less the water content is. When an average particle diameter is 10 µm or more, preferably, 20 µm or more, the gypsum having the water content sufficiently reduced can be obtained. Here, the "average particle diameter" in the present invention indicates a particle diameter measured by a method specified in JISZ8825 (laser diffraction method).

Judging from the results of FIGS. 10 and 11, the highly-purified gypsum having the low water content can be precipitated by adjusting the pH in the second pH adjustment process and adding the seed crystal in the crystallization process. The more the adding amount of the seed crystal is (the higher the concentration of the seed crystal in the crystallization tank 61 is), the faster a speed of precipitation of the gypsum 32 is. The adding amount of the seed crystal gypsum 32a which is the seed crystal is suitably set based on retention time in the crystallization tank 61, the concentration of the scale prevention agent 74, and the pH.

Further, the gypsum 32 having the average particle diameter of 10 µm or more, preferably 20 µm or more, is separated from the concentrated water 31a by the liquid cyclone 62 which is the separating unit. A part of the gypsum 32 recovered at the dewatering device 63 disposed adjacent to the liquid cyclone 62 is stored in a seed crystal tank (not illustrated) via a seed crystal circulation unit not illustrated. A part of the recovered gypsum 32 is supplied to the crystallization tank 61 as the seed crystal gypsum 32a.

Here, acid treatment may be applied to the stored gypsum 32 in the seed crystal tank. In the case where the scale prevention agent 74 adheres to the gypsum 32 separated by the dewatering device 63, the function of the adhering scale prevention agent is decreased by the acid treatment. A kind of the acid used here is not limited, but sulfuric acid is optimal in consideration of power reduction at the second desalination device 55B.

The gypsum 32 crystallized in the crystallization tank 61 has wide particle diameter distribution, but since the gypsum 32 having the particle diameter 10 µm or more is separated and recovered from the concentrated water 31a at the liquid cyclone 62, the large gypsum can be utilized as the seed crystal. When the large seed crystal is input, the large gypsum can be crystallized. In other words, the gypsum having high quality can be obtained with a high recovery rate. Further, the large gypsum can be more easily separated at the liquid cyclone 62, thereby achieving to downsize the liquid cyclone 62 and further leading to power reduction. The large gypsum is more easily dewatered by the dewatering device 63, thereby capable of downsizing the dewatering device 63 and further leading to power reduction.

Here, since the water treatment system in FIG. 3 is an open system except for the reverse osmosis membrane device, mixed water 111 and concentrated water 31a contact with the air, and carbonate ions are dissolved in the water. However, as described above, the mixed water 111 and concentrated water 31a are adjusted in the first pH adjustment process and second pH adjustment process so as to have the pH area at which solubility of calcium carbonate is high. The carbonate ions in the concentrated water is reduced in a step prior to the crystallization tank 61 or a step in the crystallization tank 61, and calcium carbonate has saturation solubility or lower. Further, since the pH is in the lower area by adding the acid as the pH adjuster 75, an environment having the low concentration of carbonate ions is made in accordance with the following balanced equation (1). Due to this, the concentration of calcium carbonate is kept sufficiently lower than the saturating concentration and calcium carbonate is not crystallized in the crystallization tank 61. Therefore, calcium carbonate is little contained in the recovered gypsum 32. Thus, the gypsum 32 is highly purified.

CO₂+H₂O⇔H₂CO₃⇔HCO₃⁻+H⁺⇔CO₃²-+2H⁺ (1)

Further, salt containing metals has high solubility in the acidic area. In the case where the metals remain in the mixed water 111 even after passing the pretreatment (sedimentation tank 53), hydroxide containing the metals is not precipitated in the crystallization process if the pH of the concentrated water 31a at the first desalination device 55A is lowered in the first pH adjustment process as described above. Further, in the case where the mixed water 111 has the property containing a large amount of Fe ions, Fe concentration is reduced through the above-described pretreatment. Therefore, hydroxide containing Fe(OH)₃ hardly deposits in the crystallization tank 61.

Thus, by using the water treatment method and the water treatment system of the present embodiment, it is possible to separate and recover the highly-purified gypsum 32, as valuables, which hardly contains impurities such as calcium carbonate and metal hydroxide present in the mixed water 111 including the effluent 22 discharged from the cooling tower 21.

Here, in the case of crystallizing the large gypsum 32 having the average particle diameter of 10 µm or more, preferably, 20 µm or more, a crystallization speed is generally slowed, thereby extending retention time in the crystallization tank 61. According to the present embodiment, the pH is adjusted so as to decrease the functions of the scale prevention agent 74, and also the concentration of the seed crystal is increased so as to secure the appropriate crystallization speed.

### <Recovery Process>

The concentrated water 31a containing the gypsum 32 is discharged from the crystallization tank 61, and fed to the liquid cyclone 62 which is the separating unit, and the gypsum 32 is separated from the discharged concentrated water 31a. The gypsum 32 having the average particle diameter of 10 µm or more deposits on the bottom portion of the liquid cyclone 62, and the gypsum having the small particle diameter remain in the supernatant liquid. The gypsum 32 having deposited on the bottom portion of the liquid cyclone 62 is transferred to the dewatering device 63, and further dewatered and recovered. The highly-purified gypsum 32 having low water content and containing no impurity can be separated and recovered at the high recovery rate by the recovery process. According to the present embodiment, crystallization is performed by adding the seed crystal. Therefore, the gypsum 32 having the average particle diameter of 10 µm or more is mainly precipitated, and ratio of the gypsum having small diameter is reduced. Here, a separated liquid 64 separated at the dewatering device 63 is supplied to the spray drying device 23 so as to be subjected to spray drying.

Further, instead of supplying the separated liquid to the spray drying device 23 to be subjected to spray drying, the separated liquid 64 may be introduced to the discharged concentrated water 31a contained in the liquid cyclone 62, and may be treated at the second desalination device 55B together with the concentrated water 31a.

In the case of omitting the liquid cyclone 62 which is the separating unit as a modified example of the present embodiment, depositing-side concentrated water is discharged from the bottom portion of the crystallization tank 61. The large crystallized gypsum 32 deposits in the concentrated water on the bottom portion of the crystallization tank 61. The highly-purified gypsum 32 can be recovered by dewatering the concentrated water mainly containing the large gypsum 32 at the dewatering device 63. Further, since the gypsum 32 has the low water content, it is not necessary to enlarge the volume of the dewatering device 63.

### <Downstream side Separation Process>

The concentrated water 31a on the supernatant side discharged from the liquid cyclone 62 is fed to the sedimentation tank 53 and the filtering device 54. In the same process as the above-described sedimentation tank 53 and filtering device 54, the gypsum 32 and calcium carbonate remaining in the concentrated water after separation process and the metal hydroxide having remained in the concentrated water are removed.

The concentrated water 31a discharged from the filtering device 54 is fed to the second desalination device 55B. The scale prevention agent 74 may be further added to the concentrated water 31a before the concentrated water is flown into the second desalination device 55B.

Further, after adding the scale prevention agent 74, acid or alkali which is the pH adjuster 75 may be supplied to the concentrated water 31a.

In the second desalination device 55B, the concentrated water 31a obtained from the first desalination device 55A is treated. The water which has permeated through the reverse osmosis membrane 55b of the second desalination device 55B is recovered as the permeated water and as the reclaimed water 33b. The concentrated water 31b of the second desalination device 55B is introduced to the spray drying device 23, and subjected to spray drying here.

In the case of disposing the second desalination device 55B, the reclaimed water 33b can be further recovered from the concentrated water 31a on the supernatant liquid side after crystallizing the gypsum 32, thereby more improving a water recovery rate.

Since the gypsum 32 is removed from the concentrated water 31a obtained from the first desalination device 55A by the treatment at the crystallization tank 61, the ion concentration is lowered. Therefore, the required power is reduced because osmotic pressure can be more reduced compared to the case where the gypsum 32 is not removed at the second desalination device 55B.

Further, an evaporator (not illustrated) may be provided as well. The water is evaporated from the concentrated water at the evaporator, and the ions contained in the concentrated water are precipitated as solids and then recovered as solids. Since the water is recovered on the upstream side of the evaporator and an amount of the concentrated water is largely reduced, the evaporator can be formed compact and energy required for evaporation can be reduced.

According to the present embodiment, "a desalination/crystallization device" is used as the desalination device, which includes the first desalination device 55A that removes salt after introducing the scale prevention agent 74 into the mixed water 111 obtained by mixing the separated water 43 with the effluent 22 from the cooling tower 21, the crystallization tank 61 that crystallizes the gypsum 32 after the first desalination device 55A, and the liquid cyclone 62 that separates the crystallized gypsum 32. However, the present invention is not limited thereto.

Here, the gypsum 32 crystallized in the crystallization tank 61 of the desalination device 30 is discharged via a gypsum discharge line L₂₂ as illustrated in FIG. 1, and the reclaimed water 33 (33a, 33b) joins to the return line L₃₂ that returns the separated water 43 to the wet desulfurization device 16 via a reclaimed water supply line L₂₃, and is utilized as the makeup water for the gypsum slurry used in the wet desulfurization device 16.

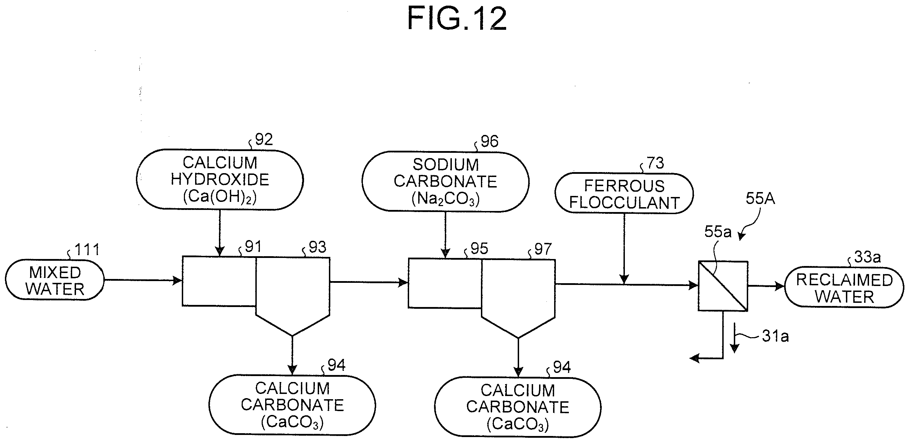

As another embodiment of the desalination device besides the desalination/crystallization device illustrated in FIG. 3, a separation device using the cold lime process illustrated in FIG. 12 may be adopted.

In FIG. 12, an example of the separation device based on the cold lime process is schematically illustrated.

As illustrated in FIG. 12, the desalination device based on the cold lime process adds calcium hydroxide (Ca(OH)₂) 92 to the mixed water 111 at an adding tank 91, calcium carbonate (CaCO₃) 94 is made to settle out in a settling tank 93 and then removed.

Next, sodium carbonate (NaCO₃) 96 is added at an adding tank 95 to make calcium carbonate (CaCO₃) 94 settle out in a settling tank 97 and be removed.

After that, the ferrous flocculant (e.g., FeCl₃) 73 is added to flocculate suspended solid content (e.g., buoyant solids such as gypsum, silica, calcium carbonate, and magnesium hydroxide). Then, same as the operation illustrated in FIG. 3, membrane separation treatment is performed by introducing the scale prevention agent 74 and the pH adjuster 75 at the time of performing treatment in the first desalination device 55A.

There are other processes that can be exemplified, such as an optimized pretreatment and unique separation (OPUS) process (by Veolia Group) in which a chemical softening unit (chemical softening) is applied after performing degassing and oil content removal with respect to water to be treated, and then treatment using a reverse osmosis membrane is performed after filtering suspended solid particles like metals; and a high efficiency reverse osmosis (HERO) process (by GE) in which, for example, Ca and Mg are removed from the water to be treated using the chemical softening agent or ion-exchanger resin, subsequently acid is added to adjust the pH to the acidic side, CO₂ gas is separated, and treatment by a reverse osmosis membrane is performed while preventing precipitation by adjusting the pH to the alkaline side for ionizing.

Further, as a membrane separation unit, an "RO membrane" is used in the first and second desalination devices 55A, 55B of the present embodiment, but an "NF membrane" may also be used.

In the case of using the NF membrane, a bivalent ion can be removed but a univalent ion cannot be completely removed same as the RO membrane. Therefore, for example, the reclaimed water cannot be supplied to desulfurization makeup water at the desulfurization device, and preferably, is supplied to the cooling tower and utilized as feed water therein. The reason is that the scale prevention agent 74 cannot be removed by the NF membrane.

According to the water treatment system of the present embodiment, bivalent metals (e.g., calcium salt, magnesium salt, etc.) contained in the mixed water 111, and sulfate ions and carbonate ions can be efficiently separated. Further, in the case of using the RO membrane, barium salt and strontium salt can be removed in addition to calcium salt and magnesium salt.

According to the present embodiment, an amount of waste water (before concentration) which can be subjected to spray drying can be remarkably increased by concentrating the mixed water 111 by using a desalination device 30A as illustrated in FIG. 3. For example, 100/(100 - 95) = 20 times of the waste water can be eliminated by using the desalination crystallization device when the recovery rate of the reclaimed water thereof is 95%.

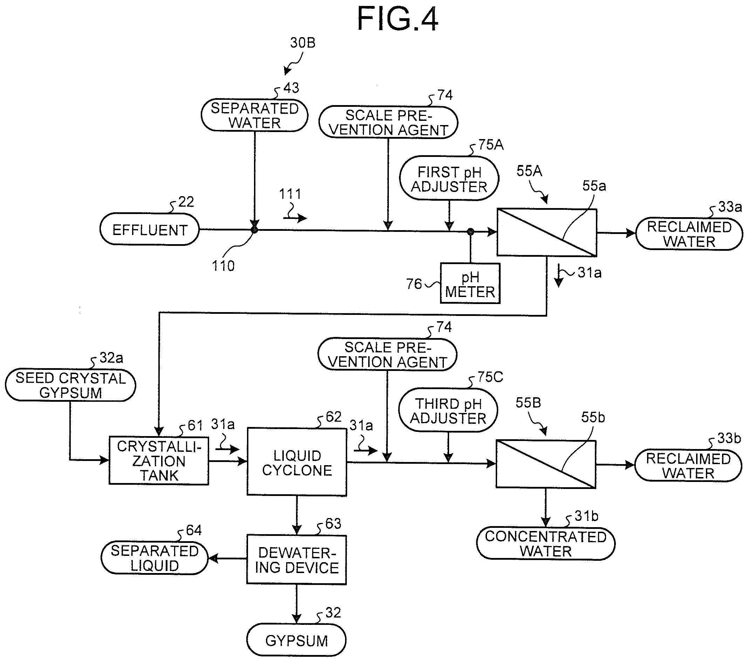

FIG. 4 is a configuration diagram illustrating an example of a different desalination device according to the present embodiment. In the desalination device 30A illustrated in FIG. 3, the sedimentation tank 53 and the filtering device 54 are disposed in the upstream side of the first desalination device 55A, and the metal content present in the mixed water 111 are made to deposit and removed as metal hydroxide, and calcium content are made to deposit and removed as calcium carbonate. However, this pretreatment may be omitted in the present invention.

As illustrated in FIG. 4, in the desalination device 30B of the present embodiment, the first desalination device 55A, crystallization tank 61, liquid cyclone 62, and second desalination device 55B are disposed, and scale adhesion to the reverse osmosis membranes 55a, 55b of the first and second desalination devices 55A, 55B is prevented by adding the scale prevention agents 74 on the upstream sides of the first and second desalination devices 55A, 55B respectively. Note that acid (e.g., sulfuric acid, etc.) and an alkaline agent (e.g. sodium hydroxide, calcium hydroxide, etc.) are added as the pH adjuster 75.

The pretreatment is not required depending on the type of mixed water 111, such that a configuration of the desalination device is simplified.

As the mixed water 111 to be treated in such a simplified desalination device 30B, effluent having low concentration of carbonate ion may be exemplified. Further, effluent having low concentration of scale content such as Ca²⁺ and Mg²⁺ may be applied, too.

Here, there are acid and alkaline agents as the pH adjuster 75. As the acid used to lower the pH, general pH adjuster such as hydrochloric acid, sulfuric acid, and citric acid may be exemplified. Further, as the alkaline agents used to raise the pH, the general pH adjuster such as sodium hydroxide and calcium hydroxide may be exemplified.

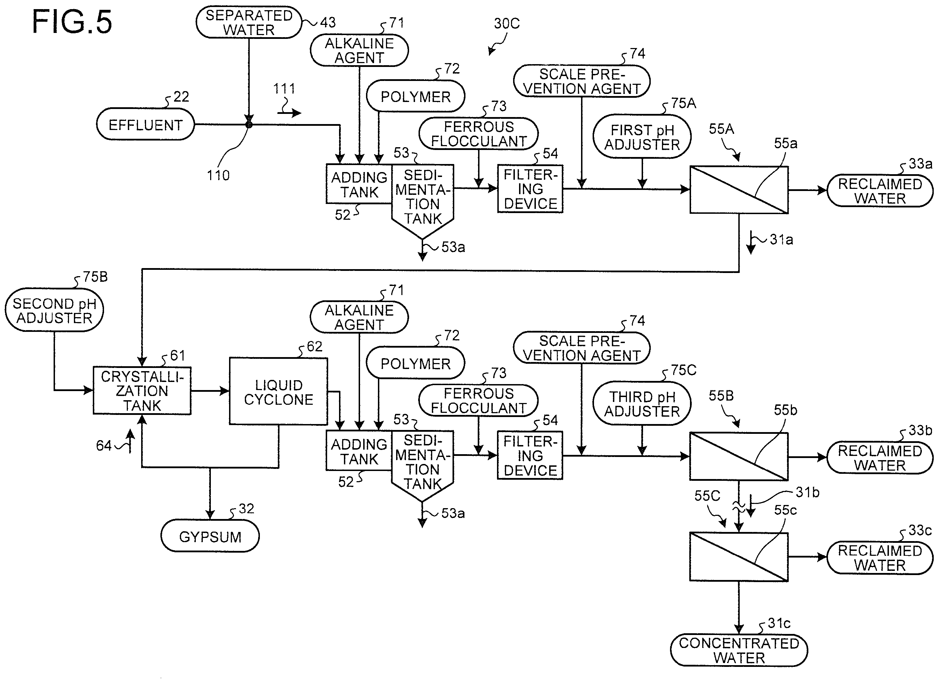

FIG. 5 is a configuration diagram illustrating an example of a different desalination device according to the present embodiment.

Further, as a desalination device 30C illustrated in FIG. 5, a third desalination device 55C may be additionally disposed on the downstream of the concentrated water side of the second desalination device 55B so as to apply three-step desalination.

In the case where the third desalination device 55C including a reverse osmosis membrane 55c is disposed, reclaimed water 33c can be further recovered from the concentrated water 31b, thereby improving a water recovery rate to 97%. Meanwhile, pretreatment units of the sedimentation tank 53 and the filtering device 54 illustrated in FIG. 3, and addition of the scale prevention agent 74 and the pH adjuster 75 are provided between the second desalination device 55B and the third desalination device 55C, but in FIG. 5, these components are omitted.

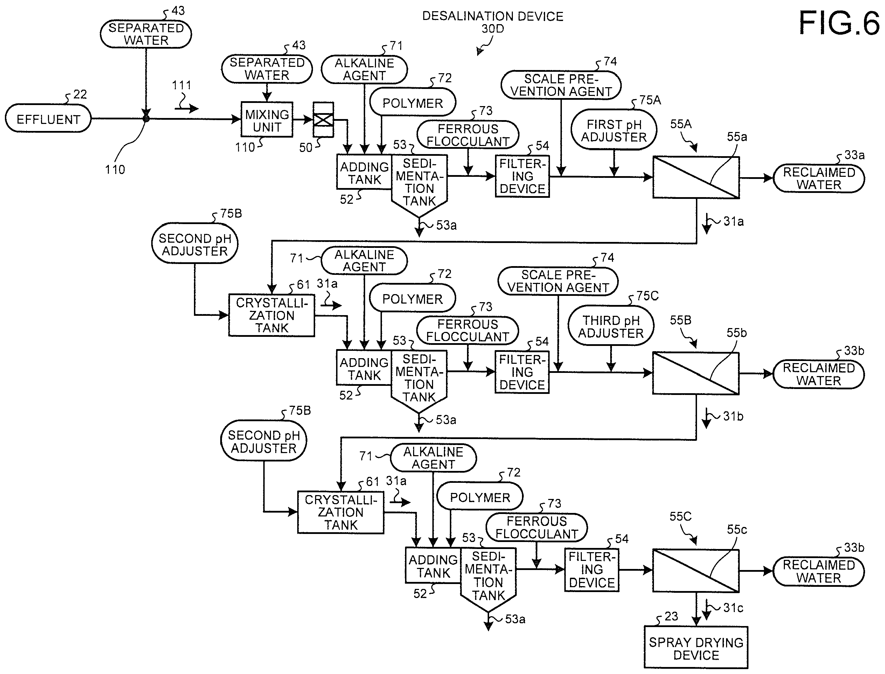

FIG. 6 is a configuration diagram illustrating an example of a different desalination device according to the present embodiment.

Further, a deaeration unit 50 which is a carbonic acid gas separation unit that separates carbonic acid gas is provided on the upstream side of the adding tank 52 like a desalination device 30D illustrated in FIG. 6. More specifically, the deaeration unit 50 is a deaeration tower including filler to disperse carbon dioxide, or a separation membrane.

In the desalination device 30D of FIG. 6, the mixed water 111 before flowing into to the deaeration unit 50 is adjusted to the low pH. Carbonic acid present in the mixed water 111 is held in equilibrium in accordance with its pH. In the case where the pH is low, like pH 6.5 or lower, carbonic acid in the mixed water 111 is present mainly in states of HCO₃⁻ and CO₂. The mixed water 111 containing CO₂ flows into the deaeration unit 50. CO₂ is removed from the mixed water 111 at the deaeration unit 50.

According to the present embodiment, same as FIG. 5, three-step desalination is performed by additionally disposing the third desalination device 55C on the downstream of the concentrated water side of the second desalination device 55B.

### Second Embodiment

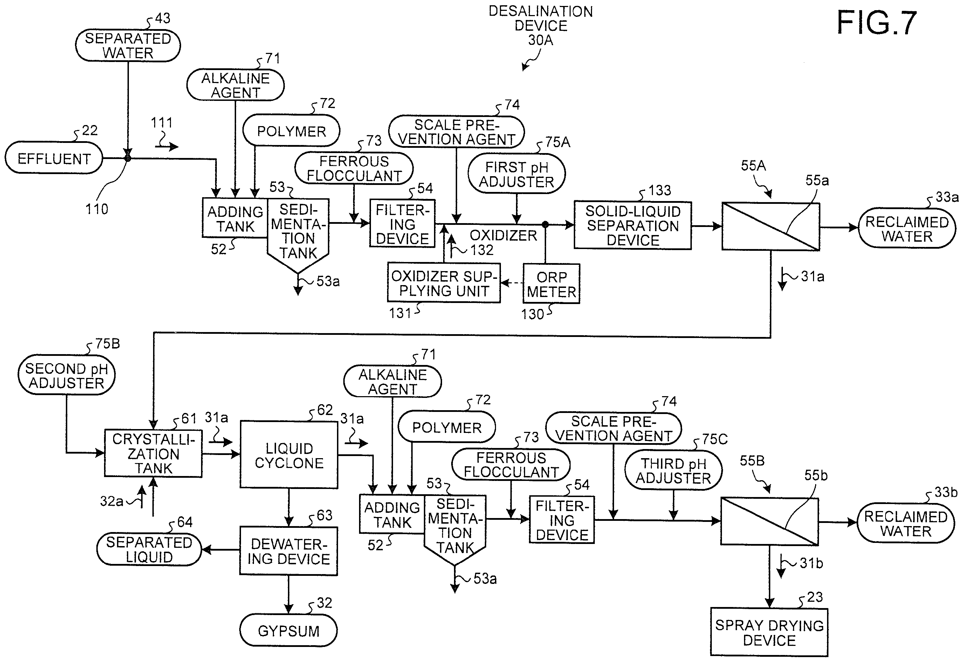

Next, a water treatment system according to a second embodiment will be described. FIG. 7 is a schematic diagram illustrating the water treatment system according to the present embodiment. As for components same as a water treatment system of a first embodiment, repetition of the same description will be omitted by denoting the components by the same reference signs.

As illustrated in FIG. 7, the water treatment system according to the present embodiment is provided with an oxidation-reduction potential (ORP) meter 130 that measures oxidation-reduction potential of mixed water 111 to be introduced into a first desalination device 55A.

Further, in the case where a value of the oxidation-reduction potential of the mixed water 111 to be introduced into the first desalination device 55A is outside a range of a predetermined value, oxidizer 132 is supplied from an oxidizer supplying unit 131.

Mercury may remain inside the separated water 43 although mercury is removed from separated water 43 separated from desulfurization waste water in a previous step before being mixed at a mixing unit 110.

Since the remaining mercury exists in various forms, removal by an RO membrane can be performed in the case where the mercury is in an ionic state. In the case of metallic mercury, the mercury is non-polar and liquid form and permeates through the RO membrane although not permeating the membrane to a permeated water side.

Therefore, a form of mercury is transformed to the ionic state by controlling the value of the oxidation-reduction potential in the mixed water 111 within the predetermined range so as to remove the mercury by the RO membrane.

Here, preferably, the value (X) of the oxidation-reduction potential in the mixed water 111 measured by the oxidation-reduction potential meter 130 is in the range of -0.69 V < ORP value (X) < 1.358 V.

The reason is that it is not preferable that chloride Cl⁻ is transformed to chlorine gas (Cl₂) in the case where the ORP value (X) exceeds "1.358 V".

Further, a lower limit value of the ORP value (X) is varied depending on a coexisting substance, and the lower limit of the ORP is -0.69 V or higher, preferably 0.2680 V or higher, more preferably 0.6125 V or higher, even more preferably 0.796 V or higher. Most of salts contained in waste water are Cl⁻ and SO₄²⁻.

Hg(l) is oxidized to Hg₂SO₇ (solid) in the case of + 0.2680 V or higher, and oxidized to Hg₂Cl₂ (solid) in the case of + 0.6125 V or higher. Meanwhile, S²⁻ and I⁻, Br⁻are also contained in the waste water, but amounts thereof are smaller compared to Cl⁻ and SO₄²⁻.

Further, on the other hand, in the case where no impurity is contained, + 0.798 V is required to oxidize Hg(l) to Hg₂²⁺.

The reason for setting an upper limit value at 1.358 V is that standard electrode potential for oxidation from Cl⁻ to Cl₂ is + 1.3583 V. Meanwhile, the upper limit value is at least + 1.3583 V or lower, preferably, + 0.89 V or lower because reaction from Cl⁻ to ClO⁻ requires + 0.89 V.

Therefore, the oxidizer 132 is input by ORP control so as to make a situation in which mercury is not reduced.

As a result, mercury is kept not in metallic mercury but in mercury oxide, and chlorine gas which is repellent to the RO membrane is kept in a form of chloride ions. Therefore, operation without damaging the RO membrane can be performed while removing mercury.

Here, preferably, air is used as the oxidizer 132. By using the air as the oxidizer 132, oxidation can be performed under mild conditions while preventing the RO membrane from being damaged.

Further, after supplying the oxidizer 132, a solid-liquid separation device 133 is disposed on the upstream side of the first desalination device 55A so as to separate solidified mercury (e.g., mercury chloride (HgCl₂), etc.) present in the mixed water 111. By this, the solidified mercury (e.g., mercury chloride (HgCl₂), etc.) is prevented from adhering to a surface of the RO membrane, thereby capable of suppressing deterioration of desalination capacity.

### Third Embodiment

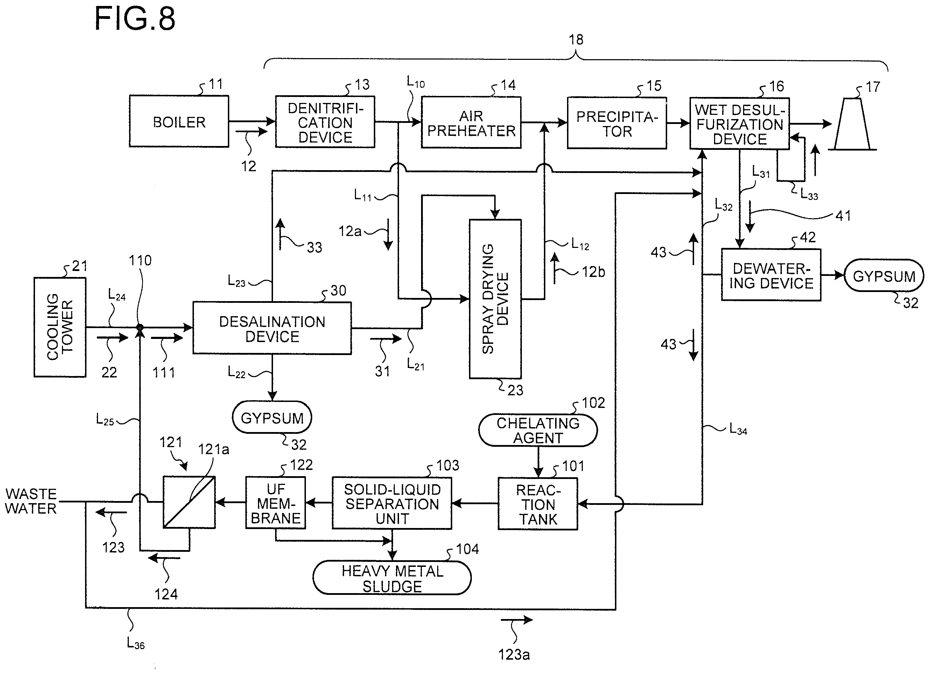

Next, a water treatment system according to a third embodiment will be described. FIG. 8 is a schematic diagram illustrating the water treatment system according to the present embodiment. As for components same as a water treatment system of the first embodiment, repetition of the same description will be omitted by denoting the components by the same reference signs.

As illustrated in FIG. 8, the water treatment system according to the present embodiment is provided with an ultrafiltration membrane (UF) membrane 122 and an NF membrane device 121 including a nano-filtration membrane (NF membrane) 121a on a downstream side of a solid-liquid separation unit 103 which separates heavy metal sludge 104 and on an upstream side of a mixing unit 110.

According to the present embodiment, desalination is performed by the membrane after removing/separating mercury at the solid-liquid separation unit 103 by adding a chelating agent 102. Preferably, the membrane for this membrane treatment is the NF membrane 121a.

A part of permeated liquid 123 from the NF membrane 121a is returned as returned water 123a to a wet desulfurization device 16 via a return line L₃₆ and also concentrated liquid 124 from the NF membrane 121a is fed to an introduction line L₂₄ side via a concentrated liquid line L₂₅, and then mixed at a mixing unit 110 with effluent 22 from a cooling tower 21 to obtain mixed water 111.

By performing desalination at the NF membrane 121a, multivalent ions (e.g., Ca²⁺, Mg²⁺, SO₄²⁻) can be concentrated on the concentrated liquid 124 side, and univalent ions (e.g., Na⁺, Cl⁻) can be concentrated on the permeated liquid 123 side.

Here, salts contained in waste water from the wet desulfurization device 16 is mainly calcium chloride (CaCl₂). Therefore, in the concentrated liquid 124, material of gypsum (e.g., Ca²⁺, SO₄²⁻) is concentrated by gypsum crystallization in the later stage by performing membrane separation by the NF membrane 121a having univalent selectivity while Cl⁻ which is a load to an RO membrane at a first desalination device 55A in a later stage can be reduced.

This can reduce concentration of soluble evaporation residues (Total dissolved solid(s); TDS) supplied to the first desalination device 55A in the later stage, and also can improve a concentration rate.

By this, concentrated water 31a from the first desalination device 55A can be reduced. As a result, a spray drying device 23 to spray-dry the concentrated water can be downsized.

Meanwhile, a scale inhibitor may be added in order to prevent clogging at the desalination device caused by the NF membrane 121a.

According to the present embodiment, the multivalent ions can be selectively concentrated by additionally desalinating separated water 43 by the NF membrane 121a after mercury is treated with the chelating agent 102. This improves the concentration rate of the RO membrane at the first desalination device 55A and leads to downsizing of the spray drying device 23.

Main substances having deliquescence are CaCl₂ and MgCl₂, and divalent cations (Ca²⁺, Mg²⁺) thereof and chloride ions Cl⁻ can be separated by the NF membrane 121a. Therefore, a problem related to deliquescence of dried salt at the spray drying device 23 can be reduced.

In the concentrated water 124 at the NF membrane 121a, the multivalent ions becomes rich, and the concentrated water is concentrated by the RO after recovering and crystallizing gypsum at a crystallizer, and then the RO concentrated water can be subjected to spray drying at the spray drying device 23.

### Fourth Embodiment

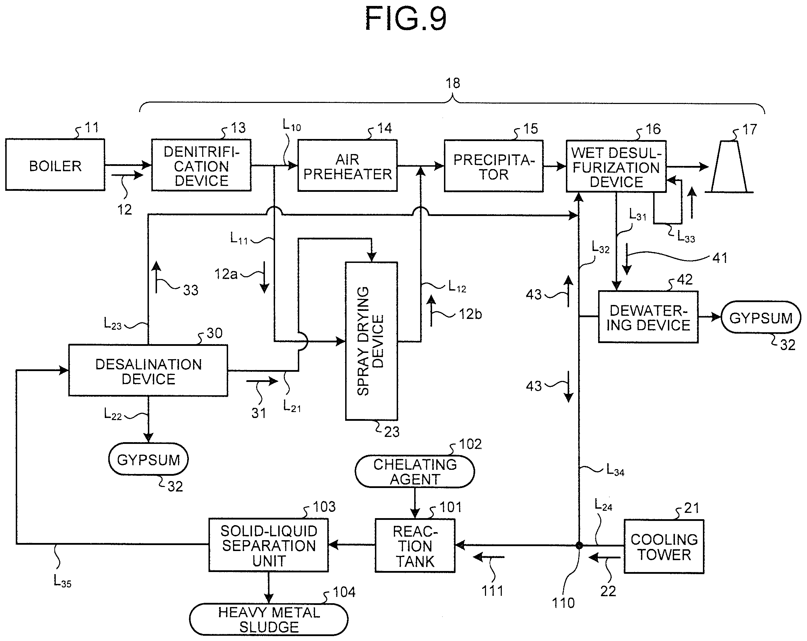

Next, a water treatment system according to a fourth embodiment will be described. FIG. 9 is a schematic diagram illustrating the water treatment system according to the present embodiment. As for components same as a water treatment system of the first embodiment, repetition of the same description will be omitted by denoting the components by the same reference signs.

As illustrated in FIG. 9, the water treatment system according to the present embodiment includes: a wet desulfurization device 16 that removes sulfur oxide present in the boiler flue gas 12 obtained from the boiler 11; a dewatering device 42 that separates gypsum 32 from desulfurization waste water 41 containing gypsum slurry obtained from the wet desulfurization device 16; a mixing unit 110 that mixes separated water 43 obtained from the dewatering device 42 with effluent 22 generated in a plant facility; a reaction tank 101 in which the mixed water 111 obtained by the mixing unit 110 is introduced and in which a chelating agent 102 is input so as to immobilize heavy metals present in the separated water 43; a solid-liquid separation unit 103 that performs solid-liquid separation with respect to solid content (heavy metal sludge) 104 present in the mixed water 111 obtained from the reaction tank 101; a desalination device 30 that removes salt content from the mixed water 111 subjected to solid-liquid separation; and a spray drying device 23 that includes a spray unit, which sprays the concentrated water 31 in which salt content has been concentrated by the desalination device 30, and that performs spray drying using a part 12a of the boiler flue gas 12.

By mixing the effluent 22 from the cooling tower 21 with the separated water 43, impurity contained in the effluent 22 from the cooling tower 21 can be removed by using the chelating agent 102.

Different from the treatment system of the first embodiment, concentration of salt is decreased and a load to an RO membrane can be reduced because an amount of water introduced into a first desalination device 55A is increased.

### Fifth Embodiment

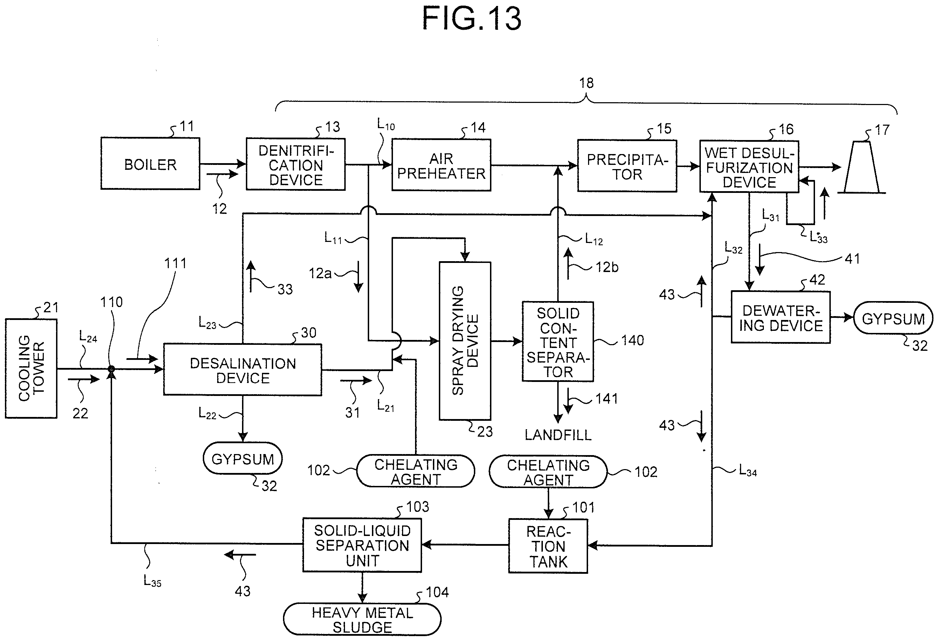

Next, a water treatment system according to a fifth embodiment will be described. FIG. 13 is a schematic diagram illustrating the water treatment system according to the present embodiment. As for components same as a water treatment system of the first embodiment, repetition of the same description will be omitted by denoting the components by the same reference signs.

As illustrated in FIG. 13, in the water treatment system according to the present embodiment, a chelating agent 102 is added into concentrated water 31 supplied to a spray drying device 23.

According to the present embodiment, the chelating agent 102 to immobilize heavy metals remaining in the concentrated water 31 is added from a chelating agent adding unit not illustrated to a line L₂₁ that supplies the concentrated water 30 obtained from the desalination device 30 to the spray drying device 23.

According to the present embodiment, dried salt present in flue gas 12b generated at the spray drying device 23 is sufficiently mixed with the chelating agent 102 by mixing the chelating agent 102 into the concentrated water 30 before the concentrated water is supplied to the spray drying device 23.

After that, solid content 141 separated at a solid content separator 140 is landfilled as it is.

Here, in the case of adding the chelating agent 102, the chelating agent is needed to be handled at a heatproof temperature thereof or lower. Therefore, preferably, a temperature (T₁) of the flue gas 12b at the time of the spray drying device 23 finishing drying is kept 200°C or lower, preferably 150°C or lower.

Note that a temperature of sprayed droplets while drying is about 80°C at the spray drying device 23, and does not rise any higher. Therefore, a temperature at the time of start drying is not limited. Meanwhile, a temperature (T₂) of branched flue gas 18a at an entrance to the spray drying device 23 is, for example, about 350°C. Therefore, the chelating agent 102 is prevented from being deteriorated by changing one or both of an evaporation amount of dehydration filtrate and an introducing flow rate of the branched discharge flue gas 12a and keeping the temperature (T₁) of the flue gas 12b at 200°C or lower, preferably 150°C or lower. As a result, heavy metals are prevented from being eluted at the time of landfilling the solid content 141.

According to the present embodiment, the heavy metals such as mercury etc. from the solid content 141 can be prevented from being eluted by performing drying at the spray drying device 23 after adding the chelating agent 102 which immobilizes the heavy metals present in the concentrated water 30.

Also, flocculant may be further added together with the chelating agent 102.

As the flocculant, coagulant which forms a nucleus of a solid, and polymer flocculant which increases flocs of solids can be used.

Here, aluminum sulfate, iron chloride, PAC, etc. may be exemplified as the coagulant. Further, as the polymer flocculant, "Taki floc (trade name; manufactured by Taki Chemical Co., Ltd.) anionic, nonionic, cationic, amphoteric)", "Epo floc L-1(trade name); manufactured by JIKCO Ltd.", etc. may be exemplified.

### Reference Signs List

11 Boiler
12 Boiler flue gas (flue gas)
18 Flue gas treatment system
21 Cooling tower
22 Effluent
23 Spray drying device
30 Desalination device
31 (31a to 31c) Concentrated water
33 (33a to 33c) Reclaimed water
55A to 55C First to third desalination devices
61 Crystallization tank
62 Liquid cyclone
74 Scale prevention agent
75 pH adjuster
101 Reaction tank
102 Chelating agent
103 Solid-liquid separation unit
104 Heavy metal sludge
110 Mixing unit
111 Mixed water

## Claims

1. A water treatment system comprising:
a wet desulfurization device that removes sulfur oxide from boiler flue gas;
a dewatering device that separates gypsum from desulfurization waste water which contains gypsum slurry and which is obtained from the wet desulfurization device;
a mercury removing unit to which is introduced separated water that is obtained from the dewatering device, and which immobilizes heavy metals present in the separated water by inputting a chelating agent;
a solid-liquid separation unit that performs solid-liquid separation with respect to solid content present in separated water obtained from the mercury removing unit;
a mixing unit that mixes separated water obtained from the solid-liquid separation unit with effluent generated in a plant facility;
a desalination device that removes salt content from mixed water obtained by the mixing unit; and
a spray drying device that includes a spraying unit, which sprays concentrated water in which salt content has been concentrated by the desalination device, and that performs spray drying using a part of the boiler flue gas.

2. A water treatment system comprising:
a wet desulfurization device that removes sulfur oxide from boiler flue gas;
a dewatering device that separates gypsum from desulfurization waste water which contains gypsum slurry and which is obtained from the wet desulfurization device;
a mixing unit that mixes separated water obtained from the dewatering device with effluent generated in a plant facility;
a reaction tank to which mixed water obtained by the mixing unit is introduced and which immobilizes heavy metals present in separated water by inputting a chelating agent;
a solid-liquid separation unit that performs solid-liquid separation with respect to solid content present in mixed water obtained from the reaction tank;
a desalination device that removes salt content from mixed water subjected to solid-liquid separation; and
a spray drying device that includes a spraying unit which sprays concentrated water in which salt content has been concentrated by the desalination device, and that performs spray drying using a part of the boiler flue gas.

3. The water treatment system according to claim 1 or 2, further comprising a membrane treatment unit that performs treatment using a membrane having univalent selectivity with respect to separated water obtained after separation performed by the solid-liquid separation unit.

4. The water treatment system according to any one of claims 1 to 3, wherein the desalination device removes bivalent salt content present in the effluent.

5. The water treatment system according to any one of claims 1 to 3, wherein the desalination device includes
a scale prevention agent supplying unit that supplies a scale prevention agent to the mixed water containing bivalent ions such as Ca ions;
a first desalination device that is disposed at a downstream side of the scale prevention agent supplying unit and that separates the mixed water into reclaimed water and concentrated water in which the Ca ions have been concentrated;
a crystallization tank that is disposed at a downstream side of the first desalination device and that is used in crystalizing gypsum from the concentrated water;
a separating unit that separates the gypsum crystalized and concentrated water obtained from the first desalination device; and
a second desalination device that is disposed at a downstream side of the separating unit and separates the concentrated water into reclaimed water and concentrated water in which the Ca ions have been concentrated.

6. The water treatment system according to claim 5, wherein the desalination device further includes
a separating unit that separates concentrated water obtained from the second desalination device; and
a third desalination device that is disposed at a downstream side of the separating unit and that separates the concentrated water into reclaimed water and concentrated water in which the Ca ions have been concentrated.

7. The water treatment system according to claim 5, further comprising an oxidation-reduction potentiometer that measures the oxidation-reduction potential of mixed water to be introduced into the first desalination device.

8. The water treatment system according to claim 7, wherein a value (X) of the oxidation-reduction potential of the mixed water, which is measured by the oxidation-reduction potentiometer, satisfies -0.69V<X<1.358V.

9. A water treatment method comprising:
wet-desulfurizing that includes removing sulfur oxide from boiler flue gas;
dewatering that includes separating gypsum from desulfurization waste water which contains gypsum slurry and which is obtained from the wet-desulfurizing;
mercury-removing that includes introducing separated water which is separated at the dewatering, and immobilizing heavy metals present in the separated water by inputting a chelating agent;
solid-liquid-separating that includes performing solid-liquid separation with respect to solid content present in separated water obtained from the mercury-removing;
mixing separated water obtained from the solid-liquid separation unit with effluent generated in a plant facility;
desalinating that includes removing salt content from mixed water obtained at the mixing; and
spray-drying that includes performing spray drying of concentrated water in which the salt content has been concentrated at the desalinating, using a part of the boiler flue gas.

10. A water treatment method comprising:
wet-desulfurizing that includes removing sulfur oxide from boiler flue gas;
dewatering that includes separating gypsum from desulfurization waste water which contains gypsum slurry and which is obtained from the wet-desulfurizing;
mixing separated water obtained from the dewatering with effluent generated in a plant facility;
depositing that includes introducing mixed water obtained at the mixing and immobilizing heavy metals present in separated water by inputting a chelating agent;
solid-liquid-separating that includes performing solid-liquid separation with respect to solid content present in mixed water obtained at the depositing;
desalinating that includes removing salt content from mixed water subjected to solid-liquid separation; and
spray-drying that includes performing spray drying of concentrated water in which salt content has been concentrated at the desalinating, using a part of the boiler flue gas.

11. The water treatment method according to claim 9 or 10, further comprising membrane-treating that includes performing treatment using a membrane having univalent selectivity with respect to separated water obtained after separation performed at the solid-liquid-separating.

12. The water treatment method according to any one of claims 9 to 11, wherein the desalinating includes removing bivalent salt content present in the effluent.

13. The water treatment method according to any one of claims 9 to 12, wherein the desalinating includes
scale-prevention-agent-supplying that includes supplying a scale prevention agent to mixed water containing bivalent ions such as Ca ions;
first-desalinating that, at a downstream side of the scale-prevention-agent-supplying, includes separating the mixed water into reclaimed water and concentrated water in which the Ca ions have been concentrated;
crystallizing that, at a downstream side of the first desalinating, includes crystalizing gypsum from the concentrated water;
a separating unit that separates the gypsum crystalized and concentrated water obtained from the first-desalinating; and
second-desalinating that, at a downstream side of the separating unit, includes separating the concentrated water into reclaimed water and concentrated water in which the Ca ions have been concentrated.

14. The water treatment method according to claim 13, wherein the desalinating further includes
separating concentrated water obtained from the second-desalinating; and
third-desalinating that, at a downstream side of the separating, includes separating the concentrated water into reclaimed water and concentrated water in which the Ca ions have been concentrated.

15. The water treatment method according to claim 9, further comprising oxidation-reduction-potential-measuring that includes measuring the oxidation-reduction potential of mixed water to be introduced at the first-desalinating.

16. The water treatment method according to claim 15, wherein a value (X) of the oxidation-reduction potential of
the mixed water, which is measured at the oxidation-reduction-potential-measuring, satisfies -0.69V<X<1.358V
